# EUROPÄISCHE PATENTSCHRIFT

(11) **EP 2 683 590 B1**
(45) Veröffentlichungstag und Bekanntmachung des Hinweises auf die Patenterteilung: **27.12.2017**
(21) Anmeldenummer: 12727234.2
(22) Anmeldetag: 06.03.2012
(51) Int. Cl.: B62B 3/14

(54) **EINKAUFSWAGEN**
SHOPPING TROLLEY
CHARIOT DE SUPERMARCHÉ

(30) Priorität: 10.03.2011 DE 202011003780 U
(43) Veröffentlichungstag der Anmeldung: 15.01.2014
(73) Patentinhaber: Eberlein, Martin, 89358 Kammeltal (DE)
(72) Erfinder: Eberlein, Martin, 89358 Kammeltal (DE)
(86) Internationale Anmeldenummer: PCT/DE2012/000238
(87) Internationale Veröffentlichungsnummer: WO 2012/119592

(56) Entgegenhaltungen:
- WO-A1-93/01077
- DE-U1-202010 013 061
- US-A- 2 596 686
- US-A- 3 027 174
- US-A- 5 618 055

## Beschreibung

Die Erfindung betrifft einen mit gleichen Wagen stapelbaren Einkaufswagen, gemäß des Oberbegriffs von Anspruch 1.

Zum Stand der Technik zählen Einkaufswagen mit der Typ-Bezeichnung "EL" der Wanzl Metallwarenfabrik GmbH in Deutschland. Das Fahrgestell dieser Einkaufswagen weist zwei nach oben gekrümmte Längsträger auf, die von der Rückseite der Einkaufswagen nach vorne führen und konisch so angeordnet sind, dass die Spurweite der hinteren Fahrrollen größer ist als die Spurweite der vorderen Fahrrollen. An der oberen Begrenzung der Längsträger sind in bekannter Weise Verbindungsmittel vorgesehen, welche einen Korb ortsfest tragen. Die Längsträger lassen sich in drei Abschnitte gliedern und zwar in einen vorderen Endabschnitt, an den sich ein Zwischenabschnitt anschließt, der in einen hinteren Endabschnitt mündet. Zumindest der Zwischenabschnitt und der vordere Endabschnitt eines jeden Längsträgers liegen dabei auf je einer senkrechten Ebene. In vielen Fällen befinden sich auch die hinteren Endabschnitte auf diesen Ebenen.

Zum Stand der Technik gehören auch Einkaufswagen der Baureihe "MOVI S" der deutschen Firma J. D. Geck GmbH in Altena, wobei mit den Einkaufswagen der Baureihe "MOVI S" das Ziel verfolgt wird, den Stapelabstand zwischen den einzelnen in einer Reihe gestapelten Einkaufswagen, im Gegensatz zu den Einkaufswagen der erwähnten Baureihe "EL", zu verringern, um die beim Versand von Einkaufswagen entstehenden Kosten zu reduzieren. Bei den Einkaufswagen der Baureihe "MOVI S" ist deshalb auf ein bekanntes Prinzip zurückgegriffen worden, das aus der US-Patentschrift 3, 027,174 ersichtlich ist. Bei dem in dieser Schrift beschriebenen Transportwagen enden vorne die beiden konisch angeordneten Längsträger zwischen den vorderen Fahrrollen, die sich an einer Querstrebe befinden, so dass die vorderen Fahrrollen außerhalb der Längsträger angeordnet sind. Dadurch wird der Winkel zwischen den beiden Längsträgern vergrößert, so dass sich diese Transportwagen enger, als bisher möglich, stapeln lassen. Bei den Einkaufswagen der Baureihe "MOVI S", wie in der DE 20 2010 013 061 U1 beschrieben, sind neben den beiden Längsträgern zur Gestaltung des vorderen Bereiches des Fahrgestelles zwei relativ große, an den Längsträgern angeschweißte, jeweils nach außen gerichtete Anschraubplatten, ferner ein die Anschraubplatten verbindender Steg sowie eine etwas zurückversetzte Querstrebe erforderlich, welche die beiden Längsträger verbindet. Diese konstruktive Lösung bewirkt hohe Fertigungskosten.

In der WO 93/01077 A1 finden sich Vorschläge, wie das Steuern einzelner beladener Einkaufswagen und das Bewegen und Steuern eines aus einer größeren Anzahl von Einkaufswagen gebildeten Stapels verbessert werden kann. Die dazu vorgeschlagenen, zum Stand der Technik zählenden Einkaufswagen weisen ein Fahrgestell auf, deren Längsträger jeweils einen nach oben führenden hinteren Endabschnitt, einen in Schieberichtung der Einkaufswagen abfallenden Zwischenabschnitt und einen daran sich anschließenden vorderen Endabschnitt aufweisen. Die vorderen Fahrrollen sind an den Außenseiten der vorderen Endabschnitte angeordnet. In Schieberichtung laufen die beiden Zwischenabschnitte spitzwinklig aufeinander zu und knicken dann so ab, dass die beiden vorderen Endabschnitte parallel zueinander angeordnet nach vorne gerichtet sind und in eine gemeinsame Querverbindung münden.

Die US 2,596,686 A beschreibt eine Prüfstation für beladene Einkaufswagen. Die dabei zu verwendenden Einkaufswagen weisen ein Fahrgestell auf, das zum Tragen beladener Einkaufskörbe geeignet ist. Das Fahrgestell dieser Einkaufswagen ist mit zwei Längsträgern ausgestattet, die einen hinteren und einen vorderen Endabschnitt und einen dazwischen angeordneten Zwischenabschnitt aufweisen, wobei die beiden so gestalteten Längsträger horizontal angeordnet sind. Die hinteren Endabschnitte sind an zwei schräg nach oben führenden Stützen befestigt, die zu einer Einrichtung gehören, die zum Tragen der Einkaufskörbe bestimmt ist. Die beiden Zwischenstücke laufen in Schieberichtung spitzwinklig aufeinander zu und knicken dann so ab, dass die beiden vorderen Endabschnitte parallel zueinander angeordnet nach vorne gerichtet sind. Die vorderen Endabschnitte sind an einem Querstück befestigt, das U-förmig ausgebildet ist und an seinen beiden nach unten gerichteten Schenkelenden je einen horizontal angeordneten Anschraubabschnitt zum Befestigen der vorderen Fahrrollen aufweist. Vom Querstück aus führen zwei weitere Träger nach oben, die an der Einrichtung zum Tragen der Einkaufskörbe befestigt sind und als Schiebeeinrichtung enden. Der Bauteileaufwand zur Herstellung solcher Einkaufswagen ist enorm.

Die US 5,618,055 A offenbart ein fahrbares Gestell, das für die Benutzung durch körperlich eingeschränkte Personen bestimmt ist. Das Fahrgestell weist einen hinteren U-förmigen Rahmen auf, der die beiden hinteren Fahrrollen trägt. Das Fahrgestell weist ferner einen vorderen T-förmigen Rahmen auf, der an seinen gegenläufig nach außen gerichteten Enden die beiden vorderen Fahrrollen trägt. Der vordere Rahmen ist um eine horizontale Achse schwenkbar am hinteren Rahmen angelenkt, so dass sich das so gestaltete Gestell raumsparend zusammenfalten lässt. Dieses fahrbare Gestell lässt sich weder in seiner Gebrauchslage, so wie dies bei Einkaufswagen gefordert wird, noch im zusammengefalteten Zustand in gleiche Gestelle platzsparend einschieben.

Es ist Aufgabe der Erfindung, einen Einkaufswagen der eingangs genannten Art so weiterzuentwickeln, dass im Gegensatz zum eben genannten Stand der Technik sowohl eine weitere Reduzierung der Herstellkosten des Fahrgestelles und damit der Herstellkosten des Einkaufswagens als auch eine Verkürzung der Stapelabstände dieser Einkaufswagen erzielbar ist.

Die Lösung der Aufgabe besteht darin, dass die vorderen Endabschnitte der Längsträger des Fahrgestelles entweder gegenläufig schräg nach vorne und nach außen weitergeführt oder quer zur Schieberichtung des Einkaufswagens gegenläufig nach außen gerichtet sind.

Weitere vorteilhafte Ausgestaltungen finden sich in den Unteransprüchen.

Durch die vorgeschlagene Lösung werden im Gegensatz zum Stand der Technik sämtliche Bauteile überflüssig, die zum Verbinden der vorderen Endabschnitte der Längsträger und zum gleichzeitigen Tragen der vorderen Fahrrollen bestimmt sind. Dies führt in vorteilhafter Weise zu einer erheblichen Einsparung von Bauteilen und damit zu einer Reduzierung der Herstellkosten des nunmehr vorgeschlagenen Einkaufswagens.
Die vorgeschlagene Lösung erlaubt es in zweckmäßiger Weise, die Befestigungsmittel für die vorderen Fahrrollen erheblich kleiner zu gestalten, da diese nicht mehr zur Seite vorstehen müssen.
Durch das Abknicken der Längsträger im Übergangsbereich von Zwischenabschnitt und vorderem Endabschnitt nach außen ist nicht nur ein direkter Weg von den Zwischenabschnitten zu den vorderen Fahrrollen geschaffen, sondern die schräg oder quer angeordneten vorderen Endabschnitte stoßen beim Stapeln mehrerer Einkaufswagen nicht an die Zwischenabschnitte der Fahrgestelle benachbarter Einkaufswagen an. Dadurch lassen sich die Stapelabstände zwischen den einzelnen Einkaufswagen bei gleichzeitiger Reduzierung des Materialaufwandes erheblich verkürzen. Dieser Gesamtvorteil ist umso bedeutsamer, je größer die Einkaufswagen sind.

Die Erfindung wird anhand mehrerer Ausführungsbeispiele näher erläutert. Es zeigt
Fig. 1 einen ersten Einkaufswagen;
Fig. 2 eine Draufsicht auf das Fahrgestell dieses Einkaufswagens;
Fig. 3 eine Detailansicht bezogen auf Fig. 1 und Fig. 2;
Fig. 4 einen zweiten Einkaufswagen;
Fig. 5 eine Draufsicht auf das Fahrgestell entsprechend Fig. 4;
Fig. 6 eine Detailansicht bezogen auf Fig. 4 und 5;
Fig. 7 zwei Fahrgestelle eines Einkaufswagens sowie
Fig. 8 eine rein geometrische Betrachtungsweise unter Einbeziehung zweier Ebenen, bezogen auf die Formgebung der beiden Längsträger.

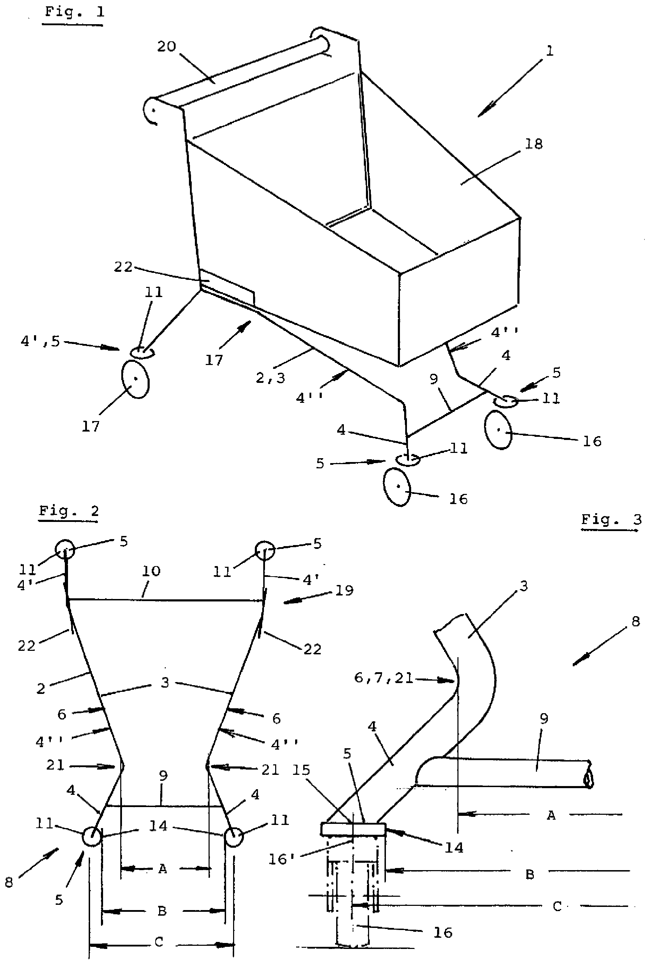

Fig. 1 zeigt einen Einkaufswagen 1, der in bekannter Weise so gestaltet ist, dass dieser sich platzsparend in einen weiteren gleichen Einkaufswagen 1 einschieben, also stapeln lässt. Der Einkaufswagen 1 weist ein mit vorderen und hinteren Fahrrollen 16, 17 ausgestattetes Fahrgestell 2 auf, das in bekannter Weise eine Warenaufnahmeeinrichtung 18 trägt. Diese kann üblicherweise, und wie auch in den Beispielen gezeigt, ein Korb sein. Möglich ist in bekannter Weise auch eine Aufnahmeeinrichtung für Taschen, in welche beim Einkaufsvorgang Ware eingelegt werden kann. Auch kann die Warenaufnahmeeinrichtung 18 in ebenfalls bekannter Weise so gestaltet sein, dass diese zum Tragen von Handkörben geeignet ist, welche der Kunde zum Einkaufen mitbringt und auf dem Einkaufswagen 1 abstellt. Rückseitig ist in ebenfalls bekannter Weise eine Schiebeeinrichtung 20 angeordnet. Bekannte und unterschiedlich gestaltbare Verbindungsmittel 22 stellen eine ortsfeste Verbindung zwischen dem Fahrgestell 2 und der Warenaufnahmeeinrichtung 18 her. Das Fahrgestell 2 weist zwei nach oben gekrümmte Längsträger 3 auf, die konisch so angeordnet sind, dass, wie ebenfalls bekannt, die Spurweite der hinteren Fahrrollen 17 größer ist als die Spurweite der vorderen Fahrrollen 16. Die beiden Längsträger 3 weisen jeweils einen vorderen Endabschnitt 4 auf, an den sich ein Zwischenabschnitt 4" anschließt. Die Längsträger 3 weisen ferner einen hinteren Endabschnitt 4' auf, in den der Zwischenabschnitt 4" mündet. Die vorderen und hinteren Endabschnitte 4, 4' schließen an ihren freien Enden mit Endflächen 5 ab, an denen je ein Befestigungsmittel 11, beispielsweise ein Flachstück oder eine dicke Scheibe oder eine Ronde, an einer Endfläche 5 anliegend, mit einem Längsträger 3 verschweißt, also mit diesem verbunden ist. Die Befestigungsmittel 11 weisen gewöhnlich eine Anschraubbohrung oder eine Gewindebohrung 15 zum Befestigen einer Fahrrolle 16, 17 auf. Der Einkaufswagen 1 ist, wie auch in den Figuren 2 und 3 gezeigt, schematisch dargestellt, da insbesondere zur Gestaltung des Fahrgestelles 1 und der Längsträger 3 in bekannter Weise unterschiedliche rohr- und stabförmige Halbzeuge sowie weitere, hier nicht näher beschriebene Teile Verwendung finden können, wobei Rundrohr für die beiden Längsträger 3 besonders zu empfehlen ist. Jeder Längsträger 3 ist bevorzugt aus einem einzigen Rohrstück gebildet. Die vorderen Endabschnitte 4 sind durch eine Querstrebe 9 miteinander verbunden, die zwischen der engsten Stelle 21 der Längsträger 3 und den Endflächen 5 angeordnet ist, siehe auch Fig. 2 und 3.

In einer Draufsicht zeigt Fig. 2 das Fahrgestell 2 des in Fig. 1 beschriebenen Einkaufswagens 1. Man erkennt die beiden gekrümmt gestalteten Längsträger 3, ferner die Querstrebe 9, welche zwischen der engsten Stelle 21 und den Endflächen 5 der Längsträger 3 angeordnet ist sowie wenigstens eine im hinteren Bereich 19, ebenfalls die beiden Längsträger 3 verbindende Querstrebe 10, die auch mit den Verbindungsmitteln 22 verbunden sein kann. An den Endflächen 5 der vorderen und hinteren Endabschnitte 4, 4' der Längsträger 3 sind die bevorzugt platten- oder rondenförmigen Befestigungsmittel 11 vorgesehen, an welchen die vorderen und die hinteren Fahrrollen 16, 17 befestigt sind. Zwischen den Endabschnitten 4, 4' eines jeden Längsträgers 3 befindet sich der Zwischenabschnitt 4". Vom hinteren Bereich 19 beginnend streben die beiden Längsträger 3 zuerst nach oben und nach vorne, führen anschließend schräg nach unten, knicken voneinander weg und streben von der dadurch gebildeten engsten Stelle 21, siehe Maß A, nach vorne weiterführend gegenläufig schräg nach außen. Der geringste horizontal gemessene Abstand A zwischen den Außenseiten 6 der Längsträger 3 ist dabei in bevorzugter Weise kleiner als der horizontal gemessene Abstand B zwischen den Innenseiten 14 der Befestigungsmittel 11, die sich an den vorderen Endabschnitten 4 der Längsträger 3 und somit an deren Endflächen 5 befinden. "Nach außen" bedeutet, vom Einkaufswagen 1 zu je einer Seite, also gegenläufig voneinander wegführend.
Die eben beschriebene Gestaltungsmöglichkeit lässt es auch zu, dass der horizontal gemessene Abstand B zwischen den Innenseiten 14 der Befestigungsmittel 11 kleiner ist als der geringste, an der engsten Stelle 21 der Längsträger 3 gemessene horizontale Abstand A. Die Abstände A und B können aber auch gleich groß sein.

Die Detailansicht gemäß Fig. 3 zeigt von vorne nach hinten betrachtet den vorderen Bereich 8 des von vorne nach hinten führenden linken Längsträgers 3. Man erkennt den Knick 7, der sich an der engsten Stelle 21 des Fahrgestelles 2 befindet, siehe auch Fig. 2, und von dem aus jeder der spiegelbildlich angeordneten Längsträger 3 und damit jeder vordere Endabschnitt 4 schräg abfallend nach außen strebt. Die vorderen Endabschnitte 4 können auch auf einer horizontalen Ebene angeordnet gegenläufig schräg nach außen streben. An der Endfläche 5 ist das Befestigungsmittel 11 mit dem Längsträger 3 verschweißt. Die Abstände A und B, wie in Fig. 2 beschrieben, sind anhand der Zeichnung ersichtlich. Strichpunktiert ist eine vordere Fahrrolle 16 eingezeichnet, gewöhnlich ist dies eine Lenkrolle, welche mit einem Befestigungsmittel 11 üblicherweise verschraubt ist. Der Abstand C zwischen den senkrechten Schwenkachsen (16') der als Lenkrollen gestalteten vorderen Fahrrollen 16 ist größer als der geringste horizontal gemessene Abstand A zwischen den Außenseiten 6 der Längsträger 3, siehe auch Fig. 2.

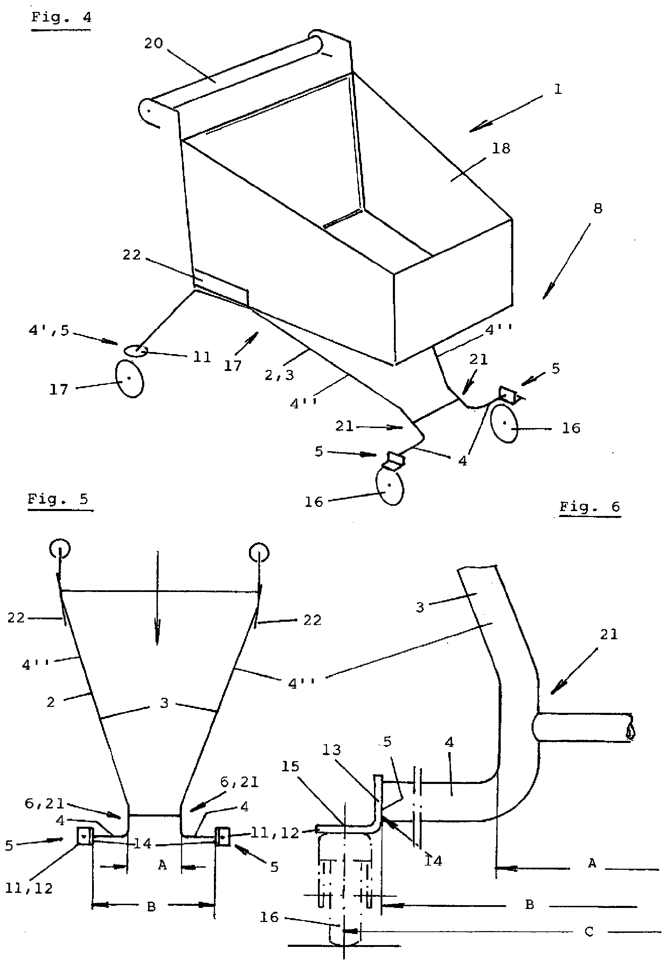

Fig. 4 zeigt ein weiteres Ausführungsbeispiel eines mit gleichen Wagen stapelbaren Einkaufswagens 1. Bis auf den vorderen Bereich 8 der beiden Längsträger 3 des Fahrgestelles 2 sind alle weiteren Einzelheiten den Beschreibungen zu Fig. 1 und 2 entnehmbar. Während beim Einkaufswagen 1 entsprechend Fig. 1 die vorderen Endabschnitte 4 der beiden Längsträger 3 schräg nach außen streben, führen bei dem hier beschriebenen Ausführungsbeispiel, wieder ausgehend von der engsten Stelle 21, die vorderen Endabschnitte 4 der beiden Längsträger 3 horizontal angeordnet und quer zur Schieberichtung des Einkaufswagens 1 verlaufend, gegenläufig voneinander weg und nach außen. Die vorderen Endabschnitte 4 der beiden Längsträger 3 schließen vorne durch je eine bevorzugt senkrechte Endfläche 5 ab, siehe auch Fig. 6.

Fig. 5 zeigt das Fahrgestell 2 des in Fig. 4 beschriebenen Einkaufswagens 1 in einer Draufsicht. Wie bereits in Fig. 2 beschrieben, streben die gekrümmten Längsträger 3 wieder konisch aufeinander zugehend nach vorne, knicken dann an der engsten Stelle 21, siehe Maß A, gegenläufig nach außen führend so ab, dass die vorderen Endabschnitte 4 der Längsholme 3 quer zur Schieberichtung des Einkaufswagens 1, siehe Pfeil, angeordnet sind. An den Endflächen 5 der vorderen Endabschnitte 4 sind winkelförmige Befestigungsmittel 11, an den Endflächen 5 anliegend, an diese angeschweißt. Der waagrechte Abschnitt 12 der Befestigungsmittel 11 weist beispielsweise eine Anschraubbohrung oder eine Gewindebohrung 15 zum Anschrauben einer vorderen Fahrrolle 16 auf, siehe auch Fig. 6. In der Zeichnung ist wieder der horizontal gemessene Abstand A zwischen den Außenseiten 6 der Längsträger 3 und der horizontal gemessene Abstand B zwischen den Innenseiten 14 der Befestigungsmittel 11 eingezeichnet. Der Abstand A ist auch hier in bevorzugter Weise wieder kleiner als der Abstand B. Andere Maßverhältnisse, siehe Beschreibung zu Fig. 2, sind möglich.

Fig. 6 zeigt im Detail den vorderen Endabschnitt 4 des linken Längsträgers 3. An der senkrechten Endfläche 5 ist das winkelförmige Befestigungsteil 11 mit seinem senkrechten Abschnitt 13, an der Endfläche 5 anliegend, mit dem Längsträger 3 verschweißt. Am waagrechten Abschnitt 12 des Befestigungsteiles 11 ist eine vordere Fahrrolle 16 strichpunktiert dargestellt. Diese Einzelheit ist, strichpunktiert getrennt, im Sinne einer deutlicheren Darstellung um 90° in die Bildebene gedreht gezeichnet. Die Maße A, B und C sind analog zu Fig. 3 und 5 ergänzend eingezeichnet.

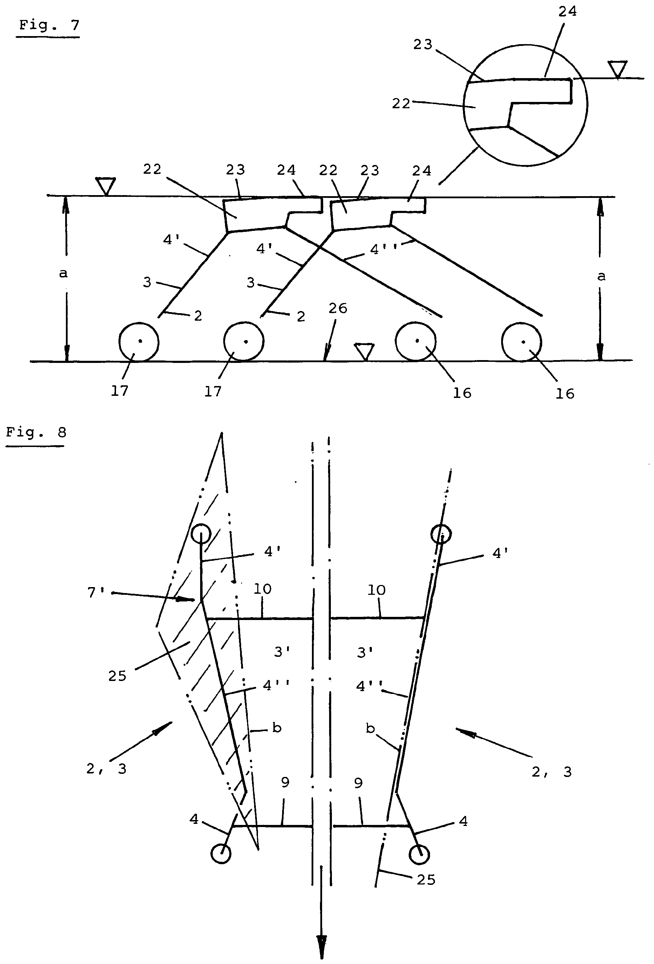

Fig. 7 zeigt zwei platzsparend ineinander geschobene Fahrgestelle 2, die bei den beschriebenen Einkaufswagen 1 Verwendung finden. Die beiden an den Längsträgern 3 in bekannter Weise oben angeordneten Verbindungsmittel 22 sind der Deutlichkeit wegen etwas größer als in Wirklichkeit gezeichnet. Die Verbindungsmittel 22 weisen in ebenfalls bekannter Weise eine schräg nach vorne ansteigende Schulter 23 auf, die zum Tragen der Warenaufnahmeeinrichtung 18, im Beispiel wäre es ein bekannter Korb, bestimmt ist. Jedes Verbindungsmittel 22 weist nunmehr einen von der Schulter 23 nach vorne weiterführenden Flächenabschnitt 24 auf, der horizontal und damit parallel zur Laufebene der Fahrrollen 16, 17 angeordnet ist, vgl. die beiden gleichen Maße a. Da nicht nur komplette Einkaufswagen 1, sondern auch Fahrgestelle 2 verschickt werden, beispielsweise in Containern, bilden die horizontalen Flächenabschnitte 24 von mindestens zwei Fahrgestellen 2 Auflagestellen für flächiges Material, beispielsweise für starke Pappe, die eine Stellfläche für weitere Fahrgestelle 2 bilden, die dadurch raumsparend auf darunter befindliche Fahrgestelle 2 gestellt werden können.
Die Zeichnung erlaubt es in beispielhafter Weise, die beiden hinteren Endabschnitte 4' und die beiden Zwischenabschnitte 4" eines Fahrgestelles 2 deutlich darzustellen. Es ist freigestellt, die Länge der beiden hinteren Endabschnitte 4' zu bestimmen. Eine erste Möglichkeit erlaubt es, die Länge bis zu jener Stelle zu bestimmen, an welcher jeder Längsträger 3 die Richtung wechselt. Eine zweite Möglichkeit gestattet es beispielsweise, die Länge der hinteren Endabschnitte 4' dort enden zu lassen, wo die Längsträger 3 beginnen, nach vorne abfallend weitergeführt zu werden.

Fig. 8 zeigt in einer Draufsicht die linke Hälfte des Fahrgestelles 2 entsprechend Fig. 2 und alternativ die rechte Hälfte eines Fahrgestelles 2, bei dem der Zwischenabschnitt 4" und der hintere Endabschnitt 4' dem Stand der Technik entsprechen. Die jeweils andere Hälfte ergänzt sich bei jedem der beiden Fahrgestelle 2 in spiegelbildlicher Weise, so dass man jeweils ein Fahrgestell 2 erhält. Beide Ausführungsbeispiele vermitteln anhand einer rein geometrischen Betrachtung die Anordnung von vorderem Endabschnitt 4, Zwischenabschnitt 4" und hinterem Endabschnitt 4' der Längsträger 3. Beim links dargestellten Längsträger 3 bilden der hintere Endabschnitt 4' und der Zwischenabschnitt 4" einen leichten Knick 7', während beim rechts gezeigten Längsträger 3 der Knick 7' fehlt.
An der Innenseite 3' des links dargestellten Längsträgers 3 ist eine geometrische, also gedachte Ebene 25 eingezeichnet oder angelegt, die beispielsweise ausgehend von der Laufebene 26 der Fahrrollen 16, 17, siehe Fig. 7, im Raum leicht schräg angeordnet, von unten nach oben führt. Die Ebene 25 ist der Deutlichkeit wegen als Dreieck gezeichnet, wobei die mit b gekennzeichnete Linie auch der Laufebene 26 angehört. Man erkennt in der Zeichnung, dass der hintere Endabschnitt 4' und der Zwischenabschnitt 4" Bestandteile der links dargestellten Ebene 25 sind. Man kann bei der durchgeführten Betrachtung auch auf den hinteren Endabschnitt 4' als Bestandteil der Ebene 25 dann verzichten, wenn der Zwischenabschnitt 4" beispielsweise eine gekrümmte oder abgewinkelte Form aufweist, durch die sich eine Ebene, im vorliegenden Falle ist es die Ebene 25, geometrisch bestimmen lässt.
An der Innenseite 3' des rechts dargestellten Längsträgers 3, der keinen Knick 7' aufweist und somit geradlinig verläuft, ist ebenfalls eine geometrische, also gedachte Ebene 25 eingezeichnet oder angelegt, die ausgehend von der Laufebene 26 der Fahrrollen 16, 17, nunmehr im Raum senkrecht angeordnet, von unten nach oben führt. Aufgrund der senkrechten Anordnung der Ebene 25 zeigt sich diese in der gewählten Draufsicht nur als strichpunktierte Linie. Die Linie b ist somit deckungsgleich mit der strichpunktierten Linie. Man erkennt anhand der Darstellung, dass der hintere Endabschnitt 4' und der Zwischenabschnitt 4" des rechts dargestellten Längsträgers 3 Bestandteile der rechts dargestellten Ebene 25 sind. Auch hier gilt, dass man auf den hinteren Endabschnitt 4' als Bestandteil der Ebene 25 dann verzichten kann, wenn der Zwischenabschnitt 4" aufgrund einer gekrümmten oder abgewinkelten Form in der Lage ist, eine Ebene, im vorliegenden Falle ist es die Ebene 25, geometrisch zu bestimmen.
Es lassen sich somit bei jedem der beiden Fahrgestelle 3 zwei in Schieberichtung (siehe Pfeil) des Einkaufswagens 1 sich annähernde Ebenen 25 anlegen, wobei es unerheblich ist, ob die Zwischenabschnitte 4" und die hinteren Endabschnitte 4' flächig oder nur punktuell an den Ebenen 25 anliegen.
Aus der Zeichnung ist klar ersichtlich, dass bei beiden Ausführungsbeispielen die vorderen Endabschnitte 4 der beiden Längsträger 3 eines jeden Einkaufswagens 1 aus den Ebenen 25 heraus geführt sind, wobei die vorderen Endabschnitte 4 entweder horizontal oder nach vorne abfallend angeordnet sind.

## Patentansprüche

1. Mit gleichen Wagen stapelbarer Einkaufswagen (1), mit einem Fahrgestell (2), mit einer mit dem Fahrgestell (2) verbundenen Warenaufnahmeeinrichtung (18) sowie mit einer rückseitig angeordneten Schiebeeinrichtung (20), wobei das Fahrgestell (2) zwei von der Rückseite zur Vorderseite des Einkaufswagens (1) führende, nach oben gekrümmte Längsträger (3) aufweist, an deren vorderen und hinteren, durch jeweils einen Zwischenabschnitt (4") miteinander verbundenen Endabschnitten (4, 4') endseitig je ein Befestigungsmittel (11) zum Befestigen einer Fahrrolle (16, 17) vorgesehen ist, wobei ferner die Längsträger (3) konisch so angeordnet sind, dass die Spurweite der hinteren Fahrrollen (17) größer ist als die Spurweite der vorderen Fahrrollen (16) und wobei die beiden Längsträger (3), ausgehend von ihrem hinteren Endabschnitt (4'), nach oben und nach vorne streben und anschließend nach vorne abfallend zum vorderen Endabschnitt (4) so weiter geführt sind, dass zumindest der Zwischenabschnitt (4") oder der Zwischenabschnitt (4") und der hintere Endabschnitt (4') eines jeden Längsträgers (3) einer von zwei geometrischen Ebenen (25) angehören, die sich, ausgehend von der Laufebene (26) der Fahrrollen (16, 17), von unten nach oben erstrecken und wobei die vorderen Endabschnitte aus den Ebenen herausgeführt sind, **dadurch gekennzeichnet, dass** die vorderen Endabschnitte (4) entweder gegenläufig schräg nach vorne und nach außen weitergeführt oder quer zur Schieberichtung des Einkaufswagens (1) gegenläufig nach außen gerichtet sind.

2. Einkaufswagen nach Anspruch 1, **dadurch gekennzeichnet, dass** die vorderen Endabschnitte (4) entweder nach vorne abfallend oder auf einer horizontalen Ebene angeordnet sind.

3. Einkaufswagen nach Anspruch 1, **dadurch gekennzeichnet, dass** die vorderen Endabschnitte (4), ausgehend von einer durch die Längsträger (3) gebildeten engsten Stelle (21), nach außen gerichtet sind.

4. Einkaufswagen nach Anspruch 1, **dadurch gekennzeichnet, dass** der geringste horizontal gemessene Abstand zwischen den Außenseiten (6) der Längsträger (3) kleiner ist als der horizontal gemessene Abstand zwischen den Innenseiten (14) der Befestigungsteile (11) oder kleiner ist als der horizontal gemessene Abstand zwischen den senkrechten Schwenkachsen (16') der vorderen, als Lenkrollen gestalteten Fahrrollen (16).

5. Einkaufswagen nach Anspruch 1, **dadurch gekennzeichnet, dass** die vorderen Endabschnitte (4) durch eine Querstrebe (9) verbunden sind, die zwischen der engsten Stelle (21) und den Endflächen (5) angeordnet ist.

6. Einkaufswagen nach Anspruch 1, **dadurch gekennzeichnet, dass** jedes Befestigungsmittel (11) an jedem vorderen Endabschnitt (4) an einer horizontalen oder vertikalen Endfläche (5) angeordnet ist.

7. Einkaufswagen nach Anspruch 1 oder 6, **dadurch gekennzeichnet, dass** die Befestigungsmittel (11) platten- oder winkelförmig ausgebildet sind.

8. Einkaufswagen nach Anspruch 1, **dadurch gekennzeichnet, dass** die Längsträger (3) aus Rundrohr gebildet sind.

9. Einkaufswagen nach Anspruch 1, **dadurch gekennzeichnet, dass** jedes eine Warenaufnahmeeinrichtung (18) tragende Verbindungsmittel (22) einen horizontalen Flächenabschnitt (24) aufweist und dass durch die Flächenabschnitte (24) von wenigstens zwei Fahrgestellen (2) Auflagestellen für flächiges Material, wie beispielsweise Pappe oder dergleichen, gebildet sind.

## Claims

1. Shopping trolley (1) which is stackable with similar trolleys, having a chassis (2), having a holding unit for goods (18) which is connected to the chassis (2), and having a pushing unit (20) located at the rear, wherein the chassis (2) has two upwardly curved longitudinal supports (3) leading from the rear side to the front side of the shopping trolley (1), one fastening means (11) each for fastening a castor (16, 17) being provided at each end of the front and rear end sections (4, 4') of said longitudinal supports (3), the end sections in each case being connected to one another by an intermediate section (4"), wherein, furthermore, the longitudinal supports (3) are conically arranged such that the track width of the rear castors (17) is larger than the track width of the front castors (16) and wherein the two longitudinal supports (3), proceeding from their rear end section (4'), extend upward and toward the front and subsequently, inclined downward toward the front, are continued to the front end section (4) such that at least the intermediate section (4"), or the intermediate section (4") and the end section (4'), of each longitudinal support (3) belong to either of two geometrical planes (25) which, proceeding from the plane of travel (26) of the castors (16, 17), extend from bottom to top, and wherein the front end sections extend out of the planes, **characterized in that** the front end sections (4) either extend in opposite directions obliquely toward the front and outward or are directed in opposite directions outward transversely to the pushing direction of the shopping trolley (1).

2. Shopping trolley according to Claim 1, **characterized in that** the front end sections (4) either are inclined downward toward the front or are arranged on a horizontal plane.

3. Shopping trolley according to Claim 1, **characterized in that** the front end sections (4), proceeding from a narrowest point (21) formed by the longitudinal supports (3), are directed outward.

4. Shopping trolley according to Claim 1, **characterized in that** the shortest distance measured horizontally between the outer sides (6) of the longitudinal supports (3) is smaller than the distance measured horizontally between the inner sides (14) of the fastening parts (11) or is smaller than the distance measured horizontally between the vertical pivot axes (16') of the front castors (16), which are configured as steering castors.

5. Shopping trolley according to Claim 1, **characterized in that** the front end sections (4) are connected by a transverse strut (9) which is located between the narrowest point (21) and the end surfaces (5).

6. Shopping trolley according to Claim 1, **characterized in that** each fastening means (11) is located on each front end section (4) on a horizontal or vertical end surface (5).

7. Shopping trolley according to Claim 1 or 6, **characterized in that** the fastening means (11) are formed in the form of plates or angles.

8. Shopping trolley according to Claim 1, **characterized in that** the longitudinal supports (3) are formed from round tubing.

9. Shopping trolley according to Claim 1, **characterized in that** each connecting means (22) supporting a holding unit for goods (18) has a horizontal surface section (24), and **in that** bearing points for flat material such as, for example, cardboard or the like, are formed by the surface sections (24) of at least two chassis (2).

## Revendications

1. Chariot de supermarché (1) pouvant être empilé avec des chariots identiques, comprenant un châssis de roulement (2) avec un dispositif de réception de marchandises (18) relié au châssis de roulement (2) et avec un dispositif de poussée (20) disposé du côté arrière, le châssis de roulement (2) présentant deux longerons (3) recourbés vers le haut, s'étendant depuis le côté arrière jusqu'au côté avant du chariot de supermarché (1), dont les portions d'extrémité avant et arrière (4, 4') reliées l'une à l'autre par une portion intermédiaire respective (4") sont à chaque fois pourvues du côté de l'extrémité d'un moyen de fixation (11) pour la fixation d'une roulette (16, 17), les longerons (3) étant en outre disposés de manière conique de telle sorte que l'écartement des rouleaux de roulement arrière (17) soit plus important que l'écartement des rouleaux de roulement avant (16), et les deux longerons (3), à partir de leur portion d'extrémité arrière (4'), s'étendant vers le haut et vers l'avant puis redescendant vers l'avant jusqu'à la portion d'extrémité avant (4) dans une mesure telle qu'au moins la portion intermédiaire (4") ou la portion intermédiaire (4") et la portion d'extrémité arrière (4') de chaque longeron (3) appartiennent à l'un de deux plans géométriques (25), qui s'étendent de bas en haut depuis le plan de roulement (26) des rouleaux de roulement (16, 17), et les portions d'extrémité avant étant guidées hors des plans, **caractérisé en ce que** les portions d'extrémité avant (4) se poursuivent soit en sens inverse obliquement vers l'avant et vers l'arrière soit sont orientées en sens inverse vers l'extérieur transversalement au sens de poussée du chariot de supermarché (1).

2. Chariot de supermarché selon la revendication 1, **caractérisé en ce que** les portions d'extrémité avant (4) sont disposées de manière à descendre vers l'avant ou dans un plan horizontal.

3. Chariot de supermarché selon la revendication 1, **caractérisé en ce que** les portions d'extrémité avant (4), partant d'un point le plus étroit (21) formé par les longerons (3), sont orientées vers l'extérieur.

4. Chariot de supermarché selon la revendication 1, **caractérisé en ce que** la plus petite distance mesurée horizontalement entre les côtés extérieurs (6) des longerons (3) est inférieure à la distance mesurée horizontalement entre les côtés intérieurs (14) des pièces de fixation (11) ou est inférieure à la distance mesurée horizontalement entre les axes de pivotement verticaux (16') des rouleaux de roulement avant (16) configurés sous forme de rouleaux directeurs.

5. Chariot de supermarché selon la revendication 1, **caractérisé en ce que** les portions d'extrémité avant (4) sont reliées par une traverse (9) qui est disposée entre le point le plus étroit (21) et les surfaces d'extrémité (5).

6. Chariot de supermarché selon la revendication 1, **caractérisé en ce que** chaque moyen de fixation (11) est disposé au niveau de chaque portion d'extrémité avant (4) au niveau d'une surface d'extrémité horizontale ou verticale (5).

7. Chariot de supermarché selon la revendication 1 ou 6, **caractérisé en ce que** les moyens de fixation (11) sont réalisés en forme de plaque ou de coude.

8. Chariot de supermarché selon la revendication 1, **caractérisé en ce que** les longerons (3) sont formés de tube rond.

9. Chariot de supermarché selon la revendication 1, **caractérisé en ce que** chaque moyen de connexion (22) portant un dispositif de réception de marchandises (18) présente une portion de surface horizontale (24) et **en ce que** des points d'appui pour un matériau plat, par exemple du carton ou similaire, sont formés par les portions de surface (24) d'au moins deux châssis de roulement (2).
